# EUROPEAN PATENT APPLICATION

(11) **EP 2 003 157 A2**
(43) Date of publication of application: **17.12.2008**
(21) Application number: 08010528.1
(22) Date of filing: 10.06.2008
(51) Int. Cl.: C08G 18/18

(54) **Tetraalkylammonium carboxylate salts as trimerization catalysts for spray foam applications**

(30) Priority: 13.06.2007 US 762360
(71) Applicant: Air Products and Chemicals, Inc., Allentown, PA 18195-1501 (US)
(72) Inventor: Burdeniuc, Juan Jesus, Colmar, PA 18915 (US); Panitzsch, Torsten, 24558 Henstedt-Ulzburg (DE); Miller, John William, Allentown, PA 18103 (US)
(74) Representative: Kador & Partner

(57) **Abstract**

The present invention provides a method to produce a polyisocyanurate/polyurethane spray foam using a trimerization catalyst composition having tetraalkylammonium salt of a sterically hindered carboxylic acid or an α,β-unsaturated carboxylic acid.

## Description

### BACKGROUND OF THE INVENTION

The present invention relates generally to polyisocyanurate/polyurethane (PIR/PUR) spray foam formulations and methods of making PIR/PUR spray foams.

Typically, polyisocyanurate/polyurethane (PIR/PUR) spray foams are made by reacting a polyol and a polyisocyanate in the presence of a catalyst. Additional additives can be present.

An issue typically encountered when spraying PIR/PUR foams on surfaces such as concrete, wood and steel is that use of commercially available catalysts (i.e. alkali metal carboxylates) gives poor surface adhesion of the foam compositions. The surface of foam produced by conventional alkali metal carboxylates is typically characterized by friability and poor surface cure. Alkali metal carboxylate salts found in the prior art also have some undesired processing features as evidenced by their rate of rise profile which shows a distinctive trimerization "step" when plotting height versus time during the rise of foam. This behavior shown by alkali metal carboxylate salts is particularly notorious when processing PUR/PIR formulations at high isocyanate indexes which are normally used for producing low flammability spray foamed products.

Other commercially available carboxylate salts, such as those based on 2-hydroxylpropyltrimethylammonium carboxylates, have shown good processing features as evidenced by their smooth rate of rise profile and good surface cure. Unfortunately, these catalysts are normally unstable at the temperatures at which foams are produced decomposing into volatile amines byproducts. This decomposition process is responsible for imparting undesired amine odor to finished products. This is particularly significant in spray foams because they are normally applied in interiors where the concentration of volatile amine can be high due to the amine vapors being confined to a closed space causing unpleasant odor and exposure of end users to unknown amine emissions.

### BRIEF SUMMARY OF THE INVENTION

The present invention provides a method for making spray foam which comprises spraying onto a surface a composition that is made by contacting in a spray mixing head a polyisocyanate and a polyol component comprising at least one polyol, an effective amount of a catalyst composition for catalyzing the trimerization reaction comprising at least one tetraalkyl quaternary ammonium carboxylic salt which is a sterically hindered carboxylate salt, an α,β-unsaturated carboxylate salt, or a mixture thereof, and at least one blowing agent, with the proviso that the at least one blowing agent is not a chlorofluorocarbon (CFC). Due to the discovery that CFCs can deplete ozone in the stratosphere, this class of blowing agents is not desirable for use in the present invention.

Further, the present invention also discloses a catalyst composition for producing a PIR/PUR spray foam comprising at least one tetraalkyl quaternary ammonium carboxylic salt which is

(a) a sterically hindered carboxylate salt having formula (1) 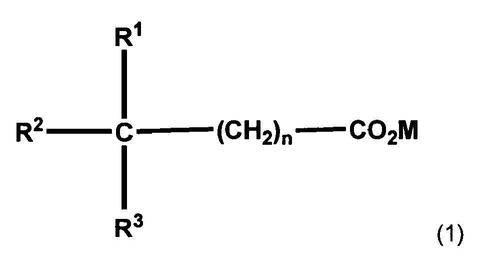 wherein:
R¹, R², and R³ are selected independently from a C1-C18 alkyl, alkenyl, aryl, or aralkyl, any of which are substituted or unsubstituted;
n is an integer from 0 to 10, inclusive; and
M is a quaternary ammonium ion; or
(b) an α,β-unsaturated carboxylate salt having formula (2) 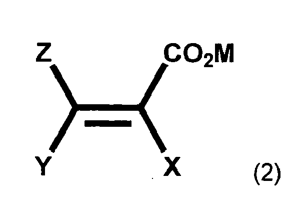 wherein:
X, Y, and Z are selected independently from a hydrogen atom, methyl, ethyl, propyl, butyl, pentyl, hexyl, phenyl, tolyl, benzyl, -CO₂H, or -CO₂M; and
M is a quaternary ammonium ion and where X, Y or Z is -CO₂M, such M may also be an alkali metal.

In the carboxylate salts (a) and (b) the quaternary ammonium ion M is a tetraalkyl ammonium ion where the alkyl groups are independently methyl, ethyl, propyl or butyl.

Surprisingly, the tetralkylammonium carboxylate salts of this invention when used as spray PIR/PUR catalysts can provide a smooth rate of rise profile that is similar to those obtained with commercial products such 2-hydroxypropyl trialkylammonium carboxylates. In other words, the carboxylates of the present invention show smooth rate of rise profiles with minimal presence of a trimerization "step" allowing for easier spraying processing. The catalyst composition used in this invention is also well behaved when operating at high isocyanate indexes and furthermore it does not decompose thermally under the temperatures of foam production yielding foams with no amine odor. In addition, the catalyst composition allows for faster surface cure minimizing surface friability and improving surface adhesion in finished products, an important attribute for spray foam.

### DEFINITIONS

The following definitions are provided in order to aid those skilled in the art in understanding the detailed description of the present invention.
PIR - Polyisocyanurate.
PUR - Polyurethane.
Isocyanate Index - The actual amount of polyisocyanate used divided by the theoretically required stoichiometric amount of polyisocyanate required to react with all the active hydrogen in the reaction mixture, multiplied by 100. Also known as (Eq NCO/Eq of active hydrogen)x100.
pphp - parts by weight per hundred weight parts polyol.
DABCO^{®} K15 catalyst from Air Products and Chemicals, Inc. (APCI) is a 70% solution of potassium 2-ethylhexanoate (also known potassium octoate), in diethylene glycol.
DABCO TMR^{®} catalyst from APCI is a 75% solution of 2-hydroxypropyltrimethylammonium octoate in ethylene glycol.
Polycat^{®} 5 catalyst from APCI is a urethane catalyst, namely, pentamethyldiethylenetriamine.

The term "contact product" is used herein to describe compositions wherein the components are contacted together in any order, in any manner, and for any length of time. For example, the components can be contacted by blending or mixing. Further, contacting of any component can occur in the presence or absence of any other component of the compositions or formulations described herein. Combining additional materials or components can be done by any method known to one of skill in the art. Further, the term "contact product" includes mixtures, blends, solutions, slurries, reaction products, and the like, of the cited components, or combinations thereof. Although "contact product" can include reaction products of one or more of the components, it is not required for the respective components to react with one another.

### DETAILED DESCRIPTION OF THE INVENTION

Polyurethane foams are typically made by contacting an isocyanate with a polyol in the presence of additives (catalysts, surfactants, etc) that allows the formation of foam. In the case of flex-slab foam, the isocyanate and polyol premix is contacted at a mixing head and the contacted mixture is poured on a moving conveyer where the foaming mass is allowed to free rise and cure. Similarly, in flexible molded applications, the isocyanate is contacted with the polyol premix in a mixing head and the contact mixture is poured into a heated mold to give after curing a foam product that can be pulled out from the mold. In lamination a similar case can be described where a polyol premix and an isocyanate are contacted and allowed to fill the volume of space between the laminates. In all these cases, the procedure is characterized in that the whole foam mass that constitutes the finished product cures together.

However, a significant difference exists in spray foam. Spray foam is characterized by a high pressure mixing of isocyanate and polyol premix at a mixing head and the high speed foaming mass coming from a spray nozzle is layered over a surface. This operation is repeated several times until the finished product reaches the desired thickness. In order to have a good quality product the foaming mass must cure very rapidly by the time a second layer is sprayed on the surface (typically less than 2 min and more typically less than a minute). If this does not occur, then the adhesion between the layers is weak and this can compromise the physical properties of the finished products. In addition, poor surface curing can result in the foaming mass to drip or sag and possibly solidify at a different position than the spraying area. The result is a product with poor physical properties, mechanical instability and possibly lack of sufficient adhesion to the surface where it is sprayed. Although many catalysts can provide adequate cure of a bulk mass of foam, curing at the surface is not so straightforward because the surface is at a much lower temperature than the inner part of the foam. Typical catalysts can promote good overall cure of foam but this does not necessarily mean good surface cure and it consequently means that a catalyst that performs well on typical foam operations (slab, flex-molded, lamination) does not necessarily mean good performance in spray.

The present invention is directed to the use of a catalyst composition comprising at least one tetraalkylammonium salt of a sterically hindered carboxylic acid, an α,β-unsaturated carboxylic acid, or a combination thereof. This catalyst system is used as a polyisocyanate trimerization catalyst for producing polyisocyanurate/polyurethane (PIR/PUR) spray foams.

Also, the present invention provides a method for preparing a PIR/PUR spray foam which comprises contacting in a high pressure spray mixing head at least one polyisocyanate with a polyol component comprising at least one polyol, at least one blowing agent and an effective amount of a catalyst composition comprising at least one tetraalkyl ammonium salt of a sterically hindered carboxylic or α,β-unsaturated carboxylic acid, or both, and spraying the contact product onto a surface. The rigid PIR/PUR spray foams can be produced with the compositions of the present invention using any spray method known within the art.

### STERICALLY HINDERED CARBOXYLATE SALTS

Catalyst compositions used in the present invention may comprise at least one sterically hindered carboxylate salt having formula (1) 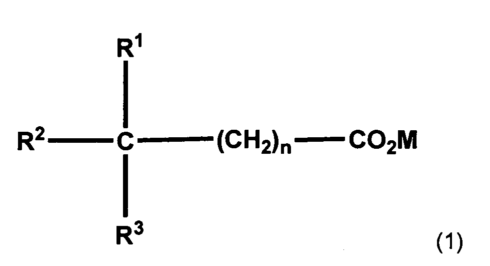 wherein:
R¹, R², and R³ are selected independently from a C1-C18 alkyl, alkenyl, aryl, or aralkyl, any of which are substituted or unsubstituted;
n is an integer from 0 to 10, inclusive; and
M is a tetraalkyl ammonium ion.

Unless otherwise specified, alkyl groups described herein are intended to include all structural isomers, linear or branched, of a given structure; for example, all enantiomers and all diasteriomers are included within this definition. As an example, unless otherwise specified, the term propyl is meant to include *n*-propyl and *iso*-propyl, while the term butyl is meant to include *n*-butyl, *iso*-butyl, *t*-butyl, *sec*-butyl, and so forth.

Non-limiting examples of alkyl groups which can be present in the sterically hindered carboxylate salt include, but are not limited to, methyl, ethyl, propyl, butyl, pentyl, hexyl, heptyl, octyl, nonyl, or decyl, and the like. Examples of alkenyl groups within the scope of the present invention include, but are not limited to, ethenyl, propenyl, butenyl, pentenyl, hexenyl, heptenyl, octenyl, nonenyl, decenyl, and the like. Aryl and aralkyl (aralkyl is defined as an aryl-substituted alkyl or arylalkyl) groups include phenyl, alkyl-substituted phenyl, naphthyl, alkyl-substituted naphthyl, and the like. For example, non-limiting examples of aryl and aralkyl groups useful in the present invention include, but are not limited to, phenyl, tolyl, benzyl, dimethylphenyl, trimethylphenyl, phenylethyl, phenylpropyl, phenylbutyl, propyl-2-phenylethyl, and the like.

In one aspect of the present invention, R¹, R², and R³ are selected independently from methyl, ethyl, propyl, butyl, pentyl, hexyl, heptyl, octyl, phenyl, tolyl, and benzyl. In another aspect, R¹, R², and R³ are selected independently from methyl, ethyl, propyl, and butyl.

In another aspect, M is a tetraalkyl ammonium ion. Tetraalkylammonium ions useful in the present invention include tetramethylammonium, tetraethylammonium, trimethylethylammonium, triethylmethylammonium, tetrapropylammonium, trimethylpropylammonium, tripropylmethylammonium, tributylmethylammonium, trimethylbutylammonium, tributylethylammonium, tributylpropylammonium and tetrabutylammonium. In a further aspect of the present invention, M is a tetramethylammonium ion.

The integer n in the above formula can range from 0 to 10, inclusive, in one aspect of the present invention. In another aspect, n can range from 0 to 5, inclusive. In still another aspect, n equals zero. As an example, when R¹, R², and R³ are each a methyl group, M is a tetramethylammonium ion, and n equals zero, the sterically hindered carboxylate salt is tetramethylammonium pivalate.

In another aspect of the present invention, the sterically hindered carboxylate salt is a tetraalkyl ammonium carboxylate salt comprising at least one quaternary carbon moiety. That is, as a minimum, one carbon atom within the carboxylate salt or carboxylic acid structures and materials described herein is a quaternary carbon. As used herein, a quaternary carbon is defined as a carbon that is bonded to four other carbon atoms. This quaternary carbon moiety can be further illustrated, for example, by the carboxylate salt and acid species that follow.

In a further aspect, the sterically hindered carboxylate salt is a salt of a carboxylic acid, for example a tetraalkyl ammonium salt of a sterically hindered carboxylic acid. Suitable carboxylic acids within the scope of the present invention include, but are not limited to, pivalic, triethylacetic, neohexanoic, neoheptanoic, neooctanoic, neodecanoic, neoundecanoic, neododecanoic acids, and the like, mixtures thereof, or any combination thereof.

Sterically hindered carboxylate salts with tetraalkyl ammonium ions are thermally stable catalyst compositions within the scope of the present invention. Such tetraalkyl quaternary salts with thermal stability include, but are not limited to, tetramethylammonium pivalate, tetraethylammonium pivalate, trimethylethylammonium pivalate, triethylmethylammonium pivalate, tripropylmethylammonium pivalate, trimethylpropylammonium pivalate, trimethylbutylammonium pivalate, tetrapropylammonium pivalate, tributylmethylammonium pivalate, trimethylbutylammonium pivalate, tetrabutylammonium pivalate, tetramethylammonium triethylacetate, tetraethylammonium triethylacetate, trimethylethylammonium triethylacetate, triethylmethylammonium triethylacetate, tripropylmethylammonium triethylacetate, trimethylpropylammonium triethylacetate, trimethylbutylammonium triethylacetate, tetrapropylammonium triethylacetate, tributylmethylammonium triethylacetate, trimethylbutylammonium triethylacetate, tetrabutylammonium triethylacetate, tetramethylammonium neoheptanoate, tetraethylammonium neoheptanoate, trimethylethylammonium neoheptanoate, triethylmethylammonium neoheptanoate, tripropylmethylammonium neoheptanoate, trimethylpropylammonium neoheptanoate, trimethylbutylammonium neoheptanoate, tetrapropylammonium neoheptanoate, tributylmethylammonium neoheptanoate, trimethylbutylammonium neoheptanoate, tetrabutylammonium neoheptanoate, tetramethylammonium neooctanoate, tetraethylammonium neooctanoate, trimethylethylammonium neooctanoate, triethylmethylammonium neooctanoate, tripropylmethylammonium neooctanoate, trimethylpropylammonium neooctanoate, trimethylbutylammonium neooctanoate, tetrapropylammonium neooctanoate, tributylmethylammonium neooctanoate, trimethylbutylammonium neooctanoate, tetrabutylammonium neooctanoate, tetramethylammonium neodecanoate, tetraethylammonium neodecanoate, trimethylethylammonium neodecanoate, triethylmethylammonium neodecanoate, tripropylmethylammonium neodecanoate, trimethylpropylammonium neodecanoate, trimethylbutylammonium neodecanoate, tetrapropylammonium neodecanoate, tributylmethylammonium neodecanoate, trimethylbutylammonium neodecanoate, tetrabutylammonium neodecanoate, and the like. Such salts can be employed individually or in any combination thereof. In a preferred embodiment the sterically hindered carboxylate is tetramethylammonium pivalate.

### α,β-UNSATURATED CARBOXYLATE SALTS

Catalyst compositions of the present invention particularly useful for producing PIR/PUR foams may comprise at least one tetraalkyl ammonium α,β-unsaturated carboxylate salt. Further, catalyst compositions within the scope of the present invention can comprise at least one α,β-unsaturated carboxylate salt having formula (2) 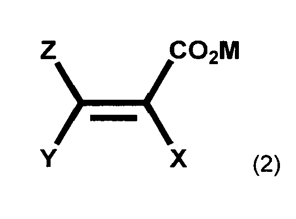 wherein:
X, Y, and Z are selected independently from a C1-C36 alkyl, alkenyl, aryl, or aralkyl, any of which are substituted or unsubstituted; -CO₂H; -CO₂M; or a hydrogen atom; and
M is a tetraalkyl ammonium ion, as is more fully described above for the tetraalkyl ammonium sterically hindered carboxylate salt and incorporated by reference here.

In addition, where X, Y or Z is -CO₂M, such M may also be an alkali metal ion such as potassium ion, affording, for example, potassium trimethylammonium maleate or potassium triethylammonium fumarate.

Unless otherwise specified, alkyl and alkenyl groups described herein are intended to include all structural isomers, linear or branched, of a given structure; for example, all enantiomers and all diasteriomers are included within this definition as is more fully described above for the tetraalkyl ammonium sterically hindered carboxylate salt and incorporated by reference here.

In one aspect of the present invention, X, Y, and Z are selected independently from a hydrogen atom, methyl, ethyl, propyl, butyl, pentyl, hexyl, phenyl, tolyl, benzyl, - CO₂H, or -CO₂M where M is described as above.

Salts and mixtures of salts of acrylic acid, methacrylic acid, fumaric acid, maleic acid, and the like, are within the scope of the present invention. Illustrative examples of such α,β-unsaturated carboxylate salts include, but are not limited to, tetramethylammonium acrylate, tetraethylammonium acrylate, tetrapropylammonium acrylate, tetrabutylammonium acrylate, trimethylethylammonium acrylate, triethylmethylammonium acrylate, tripropylmethylammonium acrylate, trimethylpropylammonium acrylate, trimethylbutylammonium acrylate, tributylmethylammonium acrylate, triethylbutylammonium acrelate, tributylethylammonium acrylate, tributylpropylammonium acrylate, tripropylbutylammonium acrylate, tetramethylammonium methacrylate, tetraethylammonium methacrylate, tetrapropylammonium methacrylate, tetrabutylammonium methacrylate, trimethylethylammonium methacrylate, triethylmethylammonium methacrylate, tripropylmethylammonium methacrylate, trimethylpropylammonium methacrylate, trimethylbutylammonium methacrylate, tributylmethylammonium methacrylate, triethylbutylammonium acrelate, tributylethylammonium methacrylate, tributylpropylammonium methacrylate, tripropylbutylammonium methacrylate, mono(tetramethylammonium) fumarate, bis(tetramethylammonium) fumarate, potassium tetramethylammonium fumarate, mono(trimethylethylammonium) fumarate, bis(trimethylethylammonium) fumarate, mono(triethylmethylammonium) fumarate, potassium triethylmethylammonium fumarate, potassium trimethylethyl fumarate, mono(tetraethylammonium) fumarate, bis(tetraethylammonium) fumarate, potassium tetraethylammonium fumarate, mono(tetrapropylammonium) fumarate, bis(tetrapropylammonium) fumarate, potassium tetrapropylammonium fumarate, bis(tripropylmethylammonium) fumarate, mono(tripropylmethylammonium) fumarate, potassium tripropylmethylammonium fumarate, bis(tripropylethylammonium) fumarate, mono(tripropylethylammonium) fumarate, potassium tripropylethylammonium fumarate, bis(tripropylmethylammonium fumarate), mono(tripropylmethylammonium) fumarate, potassium tripropylmethylammonium fumarate, mono(tetrabutylammonium) fumarate, bis(tetrabutylammonium) fumarate, potassium tetrabutylammonium fumarate, bis(tributylmethylammonium) fumarate, mono(tributylmethylammonium) fumarate, potassium tributylmethylammonium fumarate, bis(tributylethylammonium) fumarate, mono(tributylethylammonium) fumarate, potassium tributylethylammonium fumarate mono(tetramethylammonium) maleate, bis(tetramethylammonium) maleate, potassium tetramethylammonium maleate, mono(trimethylethylammonium) maleate, bis(trimethylethylammonium) maleate, mono(triethylmethylammonium) maleate, potassium triethylmethylammonium maleate, potassium trimethylethyl maleate, mono(tetraethylammonium) maleate, bis(tetraethylammonium) maleate, potassium tetraethylammonium maleate, mono(tetrapropylammonium) maleate, bis(tetrapropylammonium) maleate, potassium tetrapropylammonium maleate, bis(tripropylmethylammonium) maleate, mono(tripropylmethylammonium) maleate, potassium tripropylmethylammonium maleate, bis(tripropylethylammonium) maleate, mono(tripropylethylammonium) maleate, potassium tripropylethylammonium maleate, bis(tripropylmethylammonium maleate), mono(tripropylmethylammonium) maleate, potassium tripropylmethylammonium maleate, mono(tetrabutylammonium) maleate, bis(tetrabutylammonium) maleate, potassium tetrabutylammonium maleate, bis(tributylmethylammonium) maleate, mono(tributylmethylammonium) maleate, potassium tributylmethylammonium maleate, bis(tributylethylammonium) maleate, mono(tributylethylammonium) maleate, potassium tributylethylammonium maleate and the like, or any combination thereof. In another aspect of the present invention, the at least one α,β-unsaturated carboxylate salt is tetramethylammonium acrylate, tetramethylammonium maleate, or a combination thereof.

A catalyst composition comprising at least one tetraalkylammonium carboxylate salt can be used to trimerize isocyanates to produce isocyanurates. Generally, any amount of the tetraalkylammonium carboxylate salt can be used in the compositions of the present invention. As used in practice, catalyst systems for PIR/PUR foams typically include solutions of carboxylate salts in, for example, a diluent such as ethylene glycol. When a quantity by weight of the catalyst composition of the present invention is discussed, the quantity will exclude the effect of the diluent, unless stated otherwise. As an example, if 10 grams of a 50% solution of tetramethylammonium pivalate catalyst in ethylene glycol were used in a given application, the amount of the tetramethylammonium pivalate salt catalyst would equal 5 grams. Hence, 5 grams of that catalyst component would be used in calculating any weight ratios of that component in relation to, for example, the amount of polyol.

In one aspect of the present invention, the catalyst composition comprising a tetraalkylammonium carboxylate salt has thermal stability up to about 150°C, wherein no or substantially no volatile amine compounds are emitted. Typical foam temperatures resulting from the exothermic reactions during the processing of PIR/PUR foam can be in the range of about 80°C to about 150°C. In a further aspect, the catalyst system of the present invention has thermal stability up to about 175°C, about 200°C, about 220°C, about 240°C, or about 250°C.

The tetraalkylammonium carboxylate salts of the catalyst composition can be produced, for example, by the reaction of the particular organic acid with the tetraalkylammonium hydroxide.

The catalyst system can comprise at least one tetraalkyl ammonium α,β-unsaturated carboxylate salt, at least one tetraalkylammonium sterically hindered carboxylate salt or any combination thereof, to produce the PIR/PUR spray foam.

Additionally, the catalyst system or the novel compositions of the present invention can also further comprise at least one urethane catalyst.

### POLYISOCYANATES

Polyisocyanates that are useful in the PIR/PUR spray foam formation process include, but are not limited to, hexamethylene diisocyanate, isophorone diisocyanate, phenylene diisocyanate, toluene diisocyanate (TDI), diphenyl methane diisocyanate isomers (MDI), hydrated MDI and 1,5-naphthalene diisocyanate. For example, 2,4-TDI, 2,6-TDI, and mixtures thereof, can be readily employed in the present invention. Other suitable mixtures of diisocyanates include, but are not limited to, those known in the art as crude MDI, or PAPI, which contain 4,4'-diphenylmethane diisocyanate along with other isomeric and analogous higher polyisocyanates. In another aspect of this invention, prepolymers of polyisocyanates comprising a partially pre-reacted mixture of polyisocyanates and polyether or polyester polyol are suitable. In still another aspect, the polyisocyanate comprises MDI, or consists essentially of MDI or mixtures of MDI's.

This catalyst system is useful in the formation of spray foam products for rigid and flame retardant applications, which usually require a high Isocyanate Index. As defined previously, Isocyanate Index is the actual amount of polyisocyanate used divided by the theoretically required stoichiometric amount of polyisocyanate required to react with all the active hydrogen in the reaction mixture, multiplied by 100. For purposes of the present invention, Isocyanate Index is represented by the equation: Isocyanate Index = (Eq NCO/Eq of active hydrogen)x100, wherein Eq NCO is the number of NCO functional groups in the polyisocyanate, and Eq of active hydrogen is the number of equivalent active hydrogen atoms.

Foam products which are produced with an Isocyanate Index from about 80 to about 800 are within the scope of this invention. In accordance with other aspects of the present invention, the Isocyanate Index ranges from about 100 to about 700, from about 150 to about 650, from about 200 to about 600, or from about 250 to about 500.

### POLYOLS

Polyols that are typically used in PIR/PUR foam formation processes include polyalkylene ether and polyester polyols. The polyalkylene ether polyol includes the poly(alkyleneoxide) polymers such as poly(ethyleneoxide) and poly(propyleneoxide) polymers and copolymers with terminal hydroxyl groups derived from polyhydric compounds, including diols and triols, These include, but are not limited to, ethylene glycol, propylene glycol, 1,3-butane diol, 1,4-butane diol, 1,6-hexane diol, neopentyl glycol, diethylene glycol, dipropylene glycol, pentaerythritol, glycerol, diglycerol, trimethylol propane, cyclohexane diol, and sugars such as sucrose and like low molecular weight polyols.

Polyester polyols can be used, including those produced when a dicarboxylic acid is reacted with an excess of a diol. Non-limiting examples include adipic acid or phthalic acid or phthalic anhydride reacting with ethylene glycol or butanediol. Polyols useful in the present invention can be produced by reacting a lactone with an excess of a diol, for example, caprolactone reacted with propylene glycol. In a further aspect, active hydrogen-containing compounds such as polyester polyols and polyether polyols, and combinations thereof, are useful in the present invention.

Amine polyether polyols can be used in the present invention. These can be prepared when an amine such as, for example, ethylenediamine, diethylenetriamine, tolylenediamine, diphenylmethanediamine, or triethanolamine is reacted with ethylene oxide or propylene oxide.

Mannich polyols are also used in spray foam formulations to increase the reactivity of the system. Mannich polyols are typically prepared by condensation of phenol with formaldehyde in the presence of hydroxyl containing amines such as diethanolamine, ethanolamine and the like.

In another aspect of the present invention, a single high molecular weight polyether polyol, or a mixture of high molecular weight polyether polyols, such as mixtures of different multifunctional materials and/or different molecular weight or different chemical composition materials can be used.

In addition to the base polyols described above, or instead of them, materials commonly referred to as "copolymer polyols" may be included in a polyol component for use according to the invention. Copolymer polyols may be used in polyurethane foams to increase the resistance of the foam to deformation, for example to improve the load-bearing properties of the foam. Depending upon the load-bearing requirements for the polyurethane foam, copolymer polyols may comprise from 0 to about 80 percent by weight of the total polyol content. Examples of copolymer polyols include, but are not limited to, graft polyols and polyurea modified polyols, both of which are known in the art and are commercially available.

### BLOWING AGENTS

In accordance with the foam formulations and methods of producing spray PIR/PUR foam, suitable blowing agents that can be used alone or in combination include, but are not limited to, water, methylene chloride, acetone, hydrofluorocarbons (HFCs), hydrochlorofluorocarbons (HCFCs), and hydrocarbons. Examples of HFCs include, but are not limited to, HFC-245fa, HFC-134a, and HFC-365; illustrative examples of HCFCs include, but are not limited to, HCFC-141b, HCFC-22, and HCFC-123. Exemplary hydrocarbons include, but are not limited to, n-pentane, iso-pentane, cyclopentane, and the like, or any combination thereof. In one aspect of the present invention, the blowing agent or mixture of blowing agents comprises at least one hydrocarbon. In another aspect, the blowing agent comprises n-pentane. Yet, in another aspect of the present invention, the blowing agent consists essentially of n-pentane or mixtures of n-pentane with one or more blowing agents.

Due to the discovery that chlorofluorocarbons (CFCs) can deplete ozone in the stratosphere, this class of blowing agents is not desirable for use in the present invention. A chlorofluorocarbon (CFC) is an alkane in which all hydrogen atoms are substituted with chlorine and fluorine atoms. Examples of CFCs include trichlorofluoromethane and dichlorodifluoromethane. Thus, compositions in accordance with the present invention comprise only non-CFC blowing agents.

The amount of blowing agent used can vary based on the methods for preparing a polyisocyanurate/polyurethane spray foam. The blowing agent is present in amounts from about 10 to about 80 parts by weight per hundred weight parts polyol (pphp), from about 12 to about 60 pphp, from about 14 to about 50 pphp, or from about 16 to about 40 pphp.

If water is present in the formulation, for use as a blowing agent or otherwise, water can range from 0 to about 15 pphp. In another aspect, water can range from 0 to about 10 pphp, from 0 to about 8 pphp, from 0 to about 6 pphp, or from 0 to about 4 pphp.

### URETHANE CATALYST

Urethane catalysts accelerate the reaction to form polyurethanes, and can be used as a further component of the catalyst systems and compositions of the present invention to produce PIR/PUR foam. Urethane catalysts suitable for use herein include, but are not limited to, metal salt catalysts, such as organotins, and amine compounds, such as triethylenediamine (TEDA), N-methylimidazole, 1,2-dimethylimidazole, N-methylmorpholine, N-ethylmorpholine, triethylamine, N,N'-dimethylpiperazine, 1,3,5-tris(dimethylaminopropyl)hexahydrotriazine, 2,4,6-tris(dimethylaminomethyl)phenol, N-methyldicyclohexylamine, pentamethyldipropylene triamine, N-methyl-N'-(2-dimethylamino)ethyl piperazine, tributylamine, pentamethyldiethylenetriamine, hexamethyltriethylenetetramine, heptamethyltetraethylenepentamine, dimethylaminocyclohexylamine, pentamethyldipropylenetriamine, triethanolamine, dimethylethanolamine, bis(dimethylaminoethyl)ether, tris(3-dimethylamino)propylamine, 1,8-diazabicyclo[5.4.0] undecene or their acid blocked derivatives, and the like, as well as any mixture thereof. Particularly useful as a urethane catalyst for foam applications related to the present invention is pentamethyldiethylenetriamine.

For preparing a polyisocyanurate/polyurethane spray foam of the present invention, the urethane catalyst can be present in the formulation from 0 to about 10 pphp, from 0 to about 8 pphp, from 0 to about 6 pphp, from 0 to about 4 pphp, from 0 to about 2 pphp, or from 0 to about 1 pphp. In another aspect, the urethane catalyst is present from 0 to about 0.8 pphp, from 0 to about 0.6 pphp, from 0 to about 0.4 pphp, or from 0 to about 0.2 pphp.

### MISCELLANEOUS ADDITIVES

Depending upon on the requirements during foam manufacturing or for the end-use application of the foam product, various additives can be employed in the PIR/PUR foam formulation to tailor specific properties. These include, but are not limited to, cell stabilizers, flame retardants, chain extenders, epoxy resins, acrylic resins, fillers, pigments, or any combination thereof. It is understood that other mixtures or materials that are known in the art can be included in the foam formulations and are within the scope of the present invention.

Cell stabilizers include surfactants such as organopolysiloxanes. Useful flame retardants include halogenated organophosphorous compounds and non-halogenated compounds. Examples of a halogenated flame retardant are trichloropropylphosphate (TCPP) and trichloroethylphosphate (TCEP). For example, triethylphosphate ester (TEP) and dimethylmethylphosphonate (DMMP) are non-halogenated flame retardants. Chain extenders such as ethylene glycol and butane diol can also be employed in the present invention. Ethylene glycol, for instance, can also be present in the formulation as a diluent or solvent for the carboxylate salt catalysts of the present invention.

### PIR/PUR FOAM FORMULATION AND PROCESS

The present invention provides a method for preparing a spray PIR/PUR foam which comprises contacting in a spray mixing head/applicator at least one polyisocyanate with a polyol component comprising at least one polyol, at least one blowing agent and an effective amount of a catalyst composition comprising at least one tetraalkylammonium salt of a sterically hindered carboxylic or an α,β-unsaturated carboxylic acid, or both. The compositions can further comprise at least one urethane catalyst. Likewise, the compositions can further comprise at least one additive selected from at least one cell stabilizer, at least one flame retardant, at least one chain extender, at least one epoxy resin, at least one acrylic resin, at least one filler, at least one pigment, or any combination thereof. The spray head/applicator then sprays the foaming composition onto a suitable surface such as wood, plastic, concrete or metal.

In accordance with the method of the present invention, spray PIR/PUR foams can be produced having a density from about 20 Kg/m³ to about 250 Kg/m³ (about 1.25 Ib/ft³ to about 15.5 Ib/ft³), or from about 24 Kg/m³ to about 60 Kg/m³ (about 1.5 Ib/ft³ to about 3.75 Ib/ft³).

In another aspect, the method of the present invention offers a substantially consistent foam height rise versus time-even at a high Isocyanate Index-that is highly desired for foam manufacturing operations. The method for preparing PIR/PUR foams also can provide equivalent or faster surface cure when compared to other commercially available catalyst systems, such that the PIR/PUR foam has enhanced surface adherence, useful for the production are articles having an integrated spray foam component.

Optionally, in yet another aspect, the method of the present invention can produce PIR/PUR foams with no or substantially no undesirable amine odor. Dependent upon the selection of the specific at least one tetraalkyl carboxylate salt, this method can provide thermal stability at the temperatures which PIR/PUR foams normally encounter during manufacturing, even those foams formulated with a high Isocyanate Index. In a further aspect, the method for preparing PIR/PUR foam has thermally stability up to about 150°C, or about 175°C, or about 200°C, or about 220°C, or about 240°C, or about 250°C. In a still further aspect, the method of the present invention produces PIR/PUR foam that is substantially free of volatile amines and/or amine odors.

The catalyst composition comprising at least one tetraalkylammonium carboxylate salt should be present in the foam formulation in a catalytically effective amount. In PIR/PUR foam formulations of the present invention, the catalyst composition is present in amounts from about 0.05 to about 10 parts by weight per hundred weight parts of the polyol compounds, excluding the weight contribution of the catalyst system diluent. In another aspect, the catalyst composition is present in amounts from about 0.05 to about 10 parts by weight per hundred weight parts polyol (pphp). In another aspect, the catalyst composition is present in amounts from about 0.2 to about 9.5 pphp, about 0.4 to about 9 pphp, about 0.6 to about 8.5 pphp, or about 0.8 to about 8 pphp.

A general spray rigid foam formulation according to the invention in which the trimerization catalyst composition also includes a urethane catalyst would comprise the following components in parts by weight (pbw):

**Spray Rigid Foam Formulation**

| **Component** | **Parts by Wt (pphp)** |
|---|---|
| Polyester Polyol | 10-100 |
| Mannich Polyol | 0-90 |
| Polyether Polyol | 0-90 |
| Blowing Agent | 5-40 |
| Silicon Surfactant | 0.2-5 |
| Water | 0-10 |
| Amine Catalyst | 0-20 |
| Metal Catalyst | 0-20 |
| Trimerization Catalyst | 0.1-10 |
| Isocyanate Index (NCO Index) | 80-500 |

Spray rigid foams typically are made using polyester polyols of about 220 to 5000 weight average molecular weight (Mw) and hydroxyl number (OH#) of about 20 to 450.

As indicated previously, the blowing agent is not a chlorofluorocarbon (CFC) when the catalyst composition contains a tetraalkylammonium carboxylate salt.

### EXAMPLES

The foams were produced by adding a catalyst according to the present invention into a foam composition (Table 1) comprising polyisocyanate (crude MDI), a polyol, flame retardant (TCPP), surfactant, urethane catalyst (Polycat^{®} 5 catalyst), and blowing agent (*n*-pentane), in a 32-oz (951 ml) metal cup. This composition was mixed for about 10 seconds (s) at about 6,000 RPM using an overhead stirrer fitted with a 2-inch (5.1 cm) diameter stirring paddle. Sufficient MDI isocyanate was then added to achieve the 270 Isocyanate Index, and the formulation was mixed well for about 6 seconds at about 6,000 RPM using the same stirrer. The 32-oz (951 ml) cup was dropped through a hole in the bottom of a 128-oz (3804 ml) paper cup on a stand. The hole was sized appropriately to catch the lip of the 32-oz (951 ml) cup. The total volume of the foam container was about 160 oz (4755 ml). Foams approximated this volume at the end of the foam forming reaction. Foam height over time was recorded. String gel time and tack free time were measured manually with a wooden stick (e.g., tongue depressor or popsicle stick) and chronometer. Start time and rise time were determined with automated rate of rise equipment.

**Table 1 - Foam Composition**

| **Component** | **pphp*** |
|---|---|
| Polyester Polyol (OH# =260) | 100 |
| Flame Retardant (TCPP) | 5.03 |
| Surfactant (Dabco DC5598) | 1.82 |
| Polycat 5 | 0.16 |
| Catalyst | Varied |
| n-Pentane | 18.2 |
| Crude MDI | 270 Index |

| | |
|---|---|
| * Parts per Hundred Polyol (wt) | |

Various types and quantities of catalysts as shown in Table 2 were used to produce PIR/PUR foams of the present invention. Although the amounts of each catalyst are not the same in these examples, the respective catalyst quantities were chosen to provide similar string gel times. PIR/PUR foam properties are typically compared at equivalent string gel times. In these examples, unless otherwise specified, the pphp values listed for the carboxylate salt catalysts exclude the additional weight of the diluent. Table 1 lists the components of the foam formulation and their respective pphp that are used in these examples.

Each of the following tetramethylammonium carboxylate salt catalysts was prepared as a 50 wt% solution in ethylene glycol by mixing the corresponding amount of a 25 wt% methanol solution of tetramethylammonium hydroxide with ethylene glycol and neutralizing this solution with an equivalent amount of the carboxylic acid. Methanol and water of neutralization were removed by vacuum distillation.

The standard trimerization catalysts for comparison were DABCO K15 and DABCO TMR catalysts as shown in Table 2.

**Table 2**

| **Catalyst (pphp)** | **Start Time** | **String Gel Time** | **HSG Time** | **Rise Time** | **Tack Free** |
|---|---|---|---|---|---|
| | **(s)** | **(s)** | **(s)** | **(s)** | **Time (s)** |
| Dabco K15 (1.47) | 14 | 54 | 91 | 72 | 108 |
| Dabco TMR (2.17) | 16 | 49 | 91 | 65 | 77 |
| TMA Pivalate (1.25) | 20 | 50 | 83 | 70 | 67 |
| TMA 2-EHA (1.25) | 20 | 52 | 96 | 72 | 85 |
| TMA Acrylate (2.15) | 20 | 48 | 89 | 74 | 59 |
| TMA Maleate (1.5) | 16 | 45 | 87 | 75 | 62 |

TMA 2-EHA - tetramethylammonium 2-ethylhexanoate
HSG Time - height for string gel time

Tetramethylammonium pivalate showed a very smooth rate of rise profile with almost complete absence of the trimerization "step" being even smoother than the TMR standard. Thus, tetramethylammonium pivalate offered excellent foam quality products but with much better processing than both DABCO K15 and DABCO TMR catalysts. In addition, the tack free time for foam made with tetramethylammonium pivalate was shorter than those of TMR and K15 indicating better surface cure and consequently better adhesion, important attributes for spray foams.

Tetramethylammonium 2-ethylhexanoate showed the classical trimerization "step" possibly corresponding to the trimerization reaction. Thus, tetramethylammonium 2-ethylhexanoate showed a processing feature comparable to DABCO TMR. However, the tack free time (TFT) for foam made with tetramethylammonium 2-ethylhexanoate (TFT = 85) was better than Dabco K15 (TFT = 105) but significantly worse than Dabco TMR (TFT = 77). This is an indication that Dabco TMR produces better surface cure than tetramethylammonium 2-ethylhexanoate and therefore better adhesion than tetramethylammonium 2-ethylhexanoate.

Tetramethylammonium acrylate did not show the classical trimerization "step" corresponding to the trimerization reaction, a processing feature that was better than DABCO K15 or DABCO TMR. Furthermore, the TFT for foam made with tetramethylammonium acrylate (TFT = 59) was much better than Dabco K15 (TFT = 105) and Dabco TMR (TFT = 77). This is a clear indication of superior performance by tetramethylammonium acrylate over the standards. Most surprisingly, tetramethylammonium acrylate exhibited an initial delay but foam cure occurred, nevertheless, much faster than the standard catalysts.

Tetramethylammonium maleate did not show the classical trimerization "step" corresponding to the trimerization reaction, a processing feature that was better than DABCO K15 or DABCO TMR. Furthermore, the TFT for foam made with tetramethylammonium maleate (TFT = 62) was much better than Dabco K15 (TFT = 105) and Dabco TMR (TFT = 77). This is a clear indication of superior performance by tetramethylammonium maleate over the standards. Tetramethylammonium maleate did not exhibit an extensive initial delay as did tetramethylammonium acrylate. The surface cure in the case of tetramethylammonium maleate occurred much faster than in the case of both standard catalysts.

In summary, Table 2 illustrates the performance of different tetramethylammonium salts and their comparison with the corresponding standards DABCO K15 and DABCO TMR catalysts. The data shows that the best tack free time was obtained with tetramethylammonium carboxylate salts of either sterically hindered acids such as pivalic acid or α,β-unsaturated acids such as acrylic and maleic acids. These classes of acids can outperform the performance of tetralkylammonium salts of conventional acids such as 2-ethylhexanoic acid as shown by their shorter tack free time. The shorter tack free time is an indication of better surface cure which relates to better adhesion to surfaces.
In the following, preferred embodiments of the present invention are described.
1. A method for making a polyisocyanurate/polyurethane spray foam which comprises spraying onto a surface a composition made by contacting in a spray mixing head a polyisocyanate and a polyol composition comprising at least one polyol and an effective amount of a catalyst composition for catalyzing the trimerization reaction comprising at least one tetraalkylammonium carboxylate salt of formulas (1) and (2) in the presence of at least one blowing agent, with the proviso that the at least one blowing agent is not a chlorofluorocarbon, 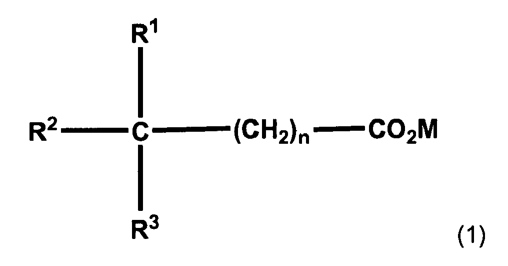 wherein:
R¹, R², and R³ are selected independently from a C1-C18 alkyl, alkenyl, aryl, or aralkyl, any of which are substituted or unsubstituted;
n is an integer from 0 to 10, inclusive; and
M is a tetraalkyl ammonium ion,
and 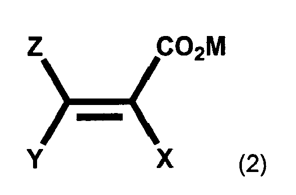 wherein:
X, Y, and Z are selected independently from a C1-C36 alkyl, alkenyl, aryl, or aralkyl, any of which are substituted or unsubstituted; -CO₂H; -CO₂M; or a hydrogen atom; and
M is a tetraalkyl ammonium ion, provided that when X, Y or Z is -CO₂M, M may also be an alkali metal ion.
2. The method of Clause 1, wherein the tetraalkylammonium carboxylate salt is a sterically hindered carboxylate salt of formula (1).
3. The method of Clause 2, wherein R¹, R², and R³ are selected independently from methyl, ethyl, propyl, butyl, pentyl, hexyl, heptyl, octyl, phenyl, tolyl, and benzyl.
4. The method of Clause 2, wherein R¹, R², and R³ are selected independently from methyl, ethyl, propyl, and butyl.
5. The method of Clause 2, wherein M is tetramethylammonium, tetraethylammonium, trimethylethylammonium, triethylmethylammonium, tetrapropylammonium, trimethylpropylammonium, tripropylmethylammonium, tributylmethylammonium, trimethylbutylammonium, tributylethylammonium, tributylpropylammonium or tetrabutylammonium.
6. The method of Clause 2, wherein M is tetramethylammonium.
7. The method of Clause 2, wherein the sterically hindered carboxylate salt is tetramethylammonium pivalate, tetraethylammonium pivalate, trimethylethylammonium pivalate, triethylmethylammonium pivalate, tripropylmethylammonium pivalate, trimethylpropylammonium pivalate, trimethylbutylammonium pivalate, tetrapropylammonium pivalate, tributylmethylammonium pivalate, trimethylbutylammonium pivalate, tetrabutylammonium pivalate, tetramethylammonium triethylacetate, tetraethylammonium triethylacetate, trimethylethylammonium triethylacetate, triethylmethylammonium triethylacetate, tripropylmethylammonium triethylacetate, trimethylpropylammonium triethylacetate, trimethylbutylammonium triethylacetate, tetrapropylammonium triethylacetate, tributylmethylammonium triethylacetate, trimethylbutylammonium triethylacetate, tetrabutylammonium triethylacetate, tetramethylammonium neoheptanoate, tetraethylammonium neoheptanoate, trimethylethylammonium neoheptanoate, triethylmethylammonium neoheptanoate, tripropylmethylammonium neoheptanoate, trimethylpropylammonium neoheptanoate, trimethylbutylammonium neoheptanoate, tetrapropylammonium neoheptanoate, tributylmethylammonium neoheptanoate, trimethylbutylammonium neoheptanoate, tetrabutylammonium neoheptanoate, tetramethylammonium neooctanoate, tetraethylammonium neooctanoate, trimethylethylammonium neooctanoate, triethylmethylammonium neooctanoate, tripropylmethylammonium neooctanoate, trimethylpropylammonium neooctanoate, trimethylbutylammonium neooctanoate, tetrapropylammonium neooctanoate, tributylmethylammonium neooctanoate, trimethylbutylammonium neooctanoate, tetrabutylammonium neooctanoate, tetramethylammonium neodecanoate, tetraethylammonium neodecanoate, trimethylethylammonium neodecanoate, triethylmethylammonium neodecanoate, tripropylmethylammonium neodecanoate, trimethylpropylammonium neodecanoate, trimethylbutylammonium neodecanoate, tetrapropylammonium neodecanoate, tributylmethylammonium neodecanoate, trimethylbutylammonium neodecanoate, tetrabutylammonium neodecanoate, or any combination thereof.
8. The method of Clause 2, wherein the sterically hindered carboxylate salt is tetramethylammonium pivalate.
9. The method of Clause 2, wherein the sterically hindered carboxylate salt is a salt of pivalic acid, triethylacetic acid, neohexanoic acid, neoheptanoic acid, neooctanoic acid, neodecanoic acid, neoundecanoic acid, neododecanoic acid, or any combination thereof.
10. The method of Clause 1, wherein the blowing agent is water, methylene chloride, acetone, a hydrofluorocarbon, a hydrochlorofluorocarbon, a hydrocarbon, or any combination thereof.
11. The method of Clause 1, wherein the blowing agent is *n*-pentane, *iso*-pentane, cyclopentane, or any combination thereof.
12. The method of Clause 1, further comprising at least one urethane catalyst.
13. The method of Clause 1 in which at least one tetraalkylammonium carboxylate salt is an α,β-unsaturated carboxylate salt of formula (2).
14. The method of Clause 13 in which X, Y, and Z are selected independently from a hydrogen atom, methyl, ethyl, propyl, butyl, pentyl, hexyl, phenyl, tolyl, benzyl, -CO₂H, or -CO₂M.
15. The method of Clause 13 in which M is tetramethylammonium, tetraethylammonium, trimethylethylammonium, triethylmethylammonium, tetrapropylammonium, trimethylpropylammonium, tripropylmethylammonium, tributylmethylammonium, trimethylbutylammonium, tributylethylammonium, tributylpropylammonium or tetrabutylammonium.
16. The method of Clause 13 in which the α,β-unsaturated carboxylate salt is a salt of acrylic acid, methacrylic acid, fumaric acid, maleic acid, or any combination thereof.
17. The method of Clause 13 in which the α,β-unsaturated carboxylate salt is tetramethylammonium acrylate, tetraethylammonium acrylate, tetrapropylammonium acrylate, tetrabutylammonium acrylate, trimethylethylammonium acrylate, triethylmethylammonium acrylate, tripropylmethylammonium acrylate, trimethylpropylammonium acrylate, trimethylbutylammonium acrylate, tributylmethylammonium acrylate, triethylbutylammonium acrelate, tributylethylammonium acrylate, tributylpropylammonium acrylate, tripropylbutylammonium acrylate, tetramethylammonium methacrylate, tetraethylammonium methacrylate, tetrapropylammonium methacrylate, tetrabutylammonium methacrylate, trimethylethylammonium methacrylate, triethylmethylammonium methacrylate, tripropylmethylammonium methacrylate, trimethylpropylammonium methacrylate, trimethylbutylammonium methacrylate, tributylmethylammonium methacrylate, triethylbutylammonium acrelate, tributylethylammonium methacrylate, tributylpropylammonium methacrylate, tripropylbutylammonium methacrylate, mono(tetramethylammonium) fumarate, bis(tetramethylammonium) fumarate, potassium tetramethylammonium fumarate, mono(trimethylethylammonium) fumarate, bis(trimethylethylammonium) fumarate, mono(triethylmethylammonium) fumarate, potassium triethylmethylammonium fumarate, potassium trimethylethyl fumarate, mono(tetraethylammonium) fumarate, bis(tetraethylammonium) fumarate, potassium tetraethylammonium fumarate, mono(tetrapropylammonium) fumarate, bis(tetrapropylammonium) fumarate, potassium tetrapropylammonium fumarate, bis(tripropylmethylammonium) fumarate, mono(tripropylmethylammonium) fumarate, potassium tripropylmethylammonium fumarate, bis(tripropylethylammonium) fumarate, mono(tripropylethylammonium) fumarate, potassium tripropylethylammonium fumarate, bis(tripropylmethylammonium fumarate), mono(tripropylmethylammonium) fumarate, potassium tripropylmethylammonium fumarate, mono(tetrabutylammonium) fumarate, bis(tetrabutylammonium) fumarate, potassium tetrabutylammonium fumarate, bis(tributylmethylammonium) fumarate, mono(tributylmethylammonium) fumarate, potassium tributylmethylammonium fumarate, bis(tributylethylammonium) fumarate, mono(tributylethylammonium) fumarate, potassium tributylethylammonium fumarate mono(tetramethylammonium) maleate, bis(tetramethylammonium) maleate, potassium tetramethylammonium maleate, mono(trimethylethylammonium) maleate, bis(trimethylethylammonium) maleate, mono(triethylmethylammonium) maleate, potassium triethylmethylammonium maleate, potassium trimethylethyl maleate, mono(tetraethylammonium) maleate, bis(tetraethylammonium) maleate, potassium tetraethylammonium maleate, mono(tetrapropylammonium) maleate, bis(tetrapropylammonium) maleate, potassium tetrapropylammonium maleate, bis(tripropylmethylammonium) maleate, mono(tripropylmethylammonium) maleate, potassium tripropylmethylammonium maleate, bis(tripropylethylammonium) maleate, mono(tripropylethylammonium) maleate, potassium tripropylethylammonium maleate, bis(tripropylmethylammonium maleate), mono(tripropylmethylammonium) maleate, potassium tripropylmethylammonium maleate, mono(tetrabutylammonium) maleate, bis(tetrabutylammonium) maleate, potassium tetrabutylammonium maleate, bis(tributylmethylammonium) maleate, mono(tributylmethylammonium) maleate, potassium tributylmethylammonium maleate, bis(tributylethylammonium) maleate, mono(tributylethylammonium) maleate, potassium tributylethylammonium maleate, or any combination thereof.
18. The method of Clause 13 in which the α,β-unsaturated carboxylate salt is tetramethylammonium acrylate or tetramethylammonium maleate.
19. A method for preparing a polyisocyanurate/polyurethane spray foam which comprises contacting in a spray mixing head at least one polyisocyanate with a polyol component comprising at least one polyol, at least one blowing agent and an effective amount of a catalyst composition comprising at least one tetraalkyl ammonium salt of a sterically hindered carboxylic or α,β-unsaturated carboxylic acid, or both, and spraying the contact product onto a surface, provided that the at least one blowing agent is not a chlorofluorocarbon.
20. The method of Clause 1 in which the polyisocyanate and the polyol composition comprise the following components

| **Component** | **Parts by Wt (pphp)** |
|---|---|
| Polyester Polyol | 10-100 |
| Mannich Polyol | 0-90 |
| Polyether Polyol | 0-90 |
| Blowing Agent | 5-40 |
| Silicon Surfactant | 0.2-5 |
| Water | 0-10 |
| Amine Catalyst | 0-20 |
| Metal Catalyst | 0-20 |
| Trimerization Catalyst | 0.1-10 |
| Isocyanate Index (NCO Index) | 80-500 |

where the trimerization catalyst is a tetraalkylammonium carboxylate salt of formula (1) or (2).

## Claims

1. A method for preparing a polyisocyanurate/polyurethane spray foam which comprises contacting in a spray mixing head at least one polyisocyanate with a polyol component comprising at least one polyol, at least one blowing agent and an effective amount of a catalyst composition comprising at least one tetraalkyl ammonium salt of a sterically hindered carboxylic or α,β-unsaturated carboxylic acid, or both, and spraying the contact product onto a surface, provided that the at least one blowing agent is not a chlorofluorocarbon.

2. A method of Claim 1 wherein the tetraalkylammonium carboxylate salt is a sterically hindered carboxylate salt of formula (1) or an α,β-unsaturated carboxylate salt of formula (2) or a mixture thereof. 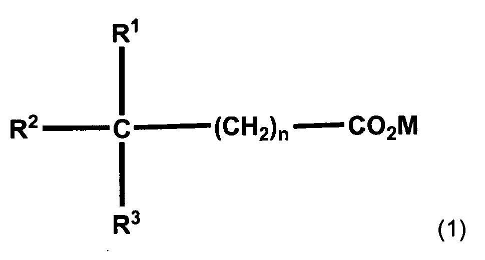 wherein:
R¹, R², and R³ are selected independently from a C1-C18 alkyl, alkenyl, aryl, or aralkyl, any of which are substituted or unsubstituted;
n is an integer from 0 to 10, inclusive; and
M is a tetraalkyl ammonium ion,
and 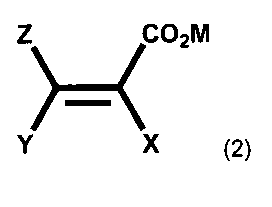 wherein:
X, Y, and Z are selected independently from a C1-C36 alkyl, alkenyl, aryl, or aralkyl, any of which are substituted or unsubstituted; -CO₂H; -CO₂M; or a hydrogen atom; and
M is a tetraalkyl ammonium ion, provided that when X, Y or Z is -CO₂M, M may also be an alkali metal ion.

3. The method of Claim 2, wherein R¹, R², and R³ are selected independently from methyl, ethyl, propyl, butyl, pentyl, hexyl, heptyl, octyl, phenyl, tolyl, and benzyl.

4. The method of Claim 2, wherein M is tetramethylammonium, tetraethylammonium, trimethylethylammonium, triethylmethylammonium, tetrapropylammonium, trimethylpropylammonium, tripropylmethylammonium, tributylmethylammonium, trimethylbutylammonium, tributylethylammonium, tributylpropylammonium or tetrabutylammonium.

5. The method of Claim 2, wherein the sterically hindered carboxylate salt is tetramethylammonium pivalate, tetraethylammonium pivalate, trimethylethylammonium pivalate, triethylmethylammonium pivalate, tripropylmethylammonium pivalate, trimethylpropylammonium pivalate, trimethylbutylammonium pivalate, tetrapropylammonium pivalate, tributylmethylammonium pivalate, trimethylbutylammonium pivalate, tetrabutylammonium pivalate, tetramethylammonium triethylacetate, tetraethylammonium triethylacetate, trimethylethylammonium triethylacetate, triethylmethylammonium triethylacetate, tripropylmethylammonium triethylacetate, trimethylpropylammonium triethylacetate, trimethylbutylammonium triethylacetate, tetrapropylammonium triethylacetate, tributylmethylammonium triethylacetate, trimethylbutylammonium triethylacetate, tetrabutylammonium triethylacetate, tetramethylammonium neoheptanoate, tetraethylammonium neoheptanoate, trimethylethylammonium neoheptanoate, triethylmethylammonium neoheptanoate, tripropylmethylammonium neoheptanoate, trimethylpropylammonium neoheptanoate, trimethylbutylammonium neoheptanoate, tetrapropylammonium neoheptanoate, tributylmethylammonium neoheptanoate, trimethylbutylammonium neoheptanoate, tetrabutylammonium neoheptanoate, tetramethylammonium neooctanoate, tetraethylammonium neooctanoate, trimethylethylammonium neooctanoate, triethylmethylammonium neooctanoate, tripropylmethylammonium neooctanoate, trimethylpropylammonium neooctanoate, trimethylbutylammonium neooctanoate, tetrapropylammonium neooctanoate, tributylmethylammonium neooctanoate, trimethylbutylammonium neooctanoate, tetrabutylammonium neooctanoate, tetramethylammonium neodecanoate, tetraethylammonium neodecanoate, trimethylethylammonium neodecanoate, triethylmethylammonium neodecanoate, tripropylmethylammonium neodecanoate, trimethylpropylammonium neodecanoate, trimethylbutylammonium neodecanoate, tetrapropylammonium neodecanoate, tributylmethylammonium neodecanoate, trimethylbutylammonium neodecanoate, tetrabutylammonium neodecanoate, or any combination thereof.

6. The method of Claim 2, wherein the sterically hindered carboxylate salt is a salt of pivalic acid, triethylacetic acid, neohexanoic acid, neoheptanoic acid, neooctanoic acid, neodecanoic acid, neoundecanoic acid, neododecanoic acid, or any combination thereof.

7. The method of Claim 1 or 2, wherein the blowing agent is water, methylene chloride, acetone, a hydrofluorocarbon, a hydrochlorofluorocarbon, a hydrocarbon, or any combination thereof, or *n*-pentane, *iso*-pentane, cyclopentane, or any combination thereof.

8. The method of Claim 1 or 2, further comprising at least one urethane catalyst.

9. The method of Claim 1 or 2 in which at least one tetraalkylammonium carboxylate salt is an α,β-unsaturated carboxylate salt of formula (2).

10. The method of Claim 9 in which X, Y, and Z are selected independently from a hydrogen atom, methyl, ethyl, propyl, butyl, pentyl, hexyl, phenyl, tolyl, benzyl, -CO₂H, or -CO₂M.

11. The method of Claim 9 in which M is tetramethylammonium, tetraethylammonium, trimethylethylammonium, triethylmethylammonium, tetrapropylammonium, trimethylpropylammonium, tripropylmethylammonium, tributylmethylammonium, trimethylbutylammonium, tributylethylammonium, tributylpropylammonium or tetrabutylammonium.

12. The method of Claim 9 in which the α,β-unsaturated carboxylate salt is a salt of acrylic acid, methacrylic acid, fumaric acid, maleic acid, or any combination thereof.

13. The method of Claim 9 in which the α,β-unsaturated carboxylate salt is tetramethylammonium acrylate, tetraethylammonium acrylate, tetrapropylammonium acrylate, tetrabutylammonium acrylate, trimethylethylammonium acrylate, triethylmethylammonium acrylate, tripropylmethylammonium acrylate, trimethylpropylammonium acrylate, trimethylbutylammonium acrylate, tributylmethylammonium acrylate, triethylbutylammonium acrelate, tributylethylammonium acrylate, tributylpropylammonium acrylate, tripropylbutylammonium acrylate, tetramethylammonium methacrylate, tetraethylammonium methacrylate, tetrapropylammonium methacrylate, tetrabutylammonium methacrylate, trimethylethylammonium methacrylate, triethylmethylammonium methacrylate, tripropylmethylammonium methacrylate, trimethylpropylammonium methacrylate, trimethylbutylammonium methacrylate, tributylmethylammonium methacrylate, triethylbutylammonium acrelate, tributylethylammonium methacrylate, tributylpropylammonium methacrylate, tripropylbutylammonium methacrylate, mono(tetramethylammonium) fumarate, bis(tetramethylammonium) fumarate, potassium tetramethylammonium fumarate, mono(trimethylethylammonium) fumarate, bis(trimethylethylammonium) fumarate, mono(triethylmethylammonium) fumarate, potassium triethylmethylammonium fumarate, potassium trimethylethyl fumarate, mono(tetraethylammonium) fumarate, bis(tetraethylammonium) fumarate, potassium tetraethylammonium fumarate, mono(tetrapropylammonium) fumarate, bis(tetrapropylammonium) fumarate, potassium tetrapropylammonium fumarate, bis(tripropylmethylammonium) fumarate, mono(tripropylmethylammonium) fumarate, potassium tripropylmethylammonium fumarate, bis(tripropylethylammonium) fumarate, mono(tripropylethylammonium) fumarate, potassium tripropylethylammonium fumarate, bis(tripropylmethylammonium fumarate), mono(tripropylmethylammonium) fumarate, potassium tripropylmethylammonium fumarate, mono(tetrabutylammonium) fumarate, bis(tetrabutylammonium) fumarate, potassium tetrabutylammonium fumarate, bis(tributylmethylammonium) fumarate, mono(tributylmethylammonium) fumarate, potassium tributylmethylammonium fumarate, bis(tributylethylammonium) fumarate, mono(tributylethylammonium) fumarate, potassium tributylethylammonium fumarate mono(tetramethylammonium) maleate, bis(tetramethylammonium) maleate, potassium tetramethylammonium maleate, mono(trimethylethylammonium) maleate, bis(trimethylethylammonium) maleate, mono(triethylmethylammonium) maleate, potassium triethylmethylammonium maleate, potassium trimethylethyl maleate, mono(tetraethylammonium) maleate, bis(tetraethylammonium) maleate, potassium tetraethylammonium maleate, mono(tetrapropylammonium) maleate, bis(tetrapropylammonium) maleate, potassium tetrapropylammonium maleate, bis(tripropylmethylammonium) maleate, mono(tripropylmethylammonium) maleate, potassium tripropylmethylammonium maleate, bis(tripropylethylammonium) maleate, mono(tripropylethylammonium) maleate, potassium tripropylethylammonium maleate, bis(tripropylmethylammonium maleate), mono(tripropylmethylammonium) maleate, potassium tripropylmethylammonium maleate, mono(tetrabutylammonium) maleate, bis(tetrabutylammonium) maleate, potassium tetrabutylammonium maleate, bis(tributylmethylammonium) maleate, mono(tributylmethylammonium) maleate, potassium tributylmethylammonium maleate, bis(tributylethylammonium) maleate, mono(tributylethylammonium) maleate, potassium tributylethylammonium maleate, or any combination thereof.

14. The method of Claim 2 in which the polyisocyanate and the polyol composition comprise the following components
| **Component** | **Parts by Wt (pphp)** |
|---|---|
| Polyester Polyol | 10-100 |
| Mannich Polyol | 0-90 |
| Polyether Polyol | 0-90 |
| Blowing Agent | 5-40 |
| Silicon Surfactant | 0.2-5 |
| Water | 0-10 |
| Amine Catalyst | 0-20 |
| Metal Catalyst | 0-20 |
| Trimerization Catalyst | 0.1-10 |
| Isocyanate Index (NCO Index) | 80-500 |
where the trimerization catalyst is a tetraalkylammonium carboxylate salt of formula (1) or (2).
